# EUROPEAN PATENT SPECIFICATION

(11) **EP 1 746 018 B1**
(45) Date of publication and mention of the grant of the patent: **02.05.2012**
(21) Application number: 06015239.4
(22) Date of filing: 21.07.2006
(51) Int. Cl.: B62K 21/04, B62K 21/12, B62K 11/14, B62K 21/22

(54) **Saddle type vehicle**
Grätschsitz-Fahrzeug
Véhicule du type monté à califourchon

(30) Priority: 21.07.2005 JP 2005210975
(43) Date of publication of application: 24.01.2007
(73) Proprietor: Yamaha Hatsudoki Kabushiki Kaisha, Shizuoka-ken 438-8501 (JP)
(72) Inventor: Hayashi, Michiya c/o Yamaha Hatsudoki Kabushiki Kaisha, Shizuoka-ken 438-8501 (JP)
(74) Representative: Grünecker, Kinkeldey, Stockmair & Schwanhäusser

(56) References cited:
- EP-A- 0 424 918
- DE-U1- 20 009 433
- DE-U1-202004 001 704
- JP-A- 10 024 884

## Description

The present invention relates to a saddle type vehicle with a handlebar unit according to the preamble of independent claim 1.

One conventional handlebar unit for a motorcycle is disclosed in JP-A-Hei 3-208786 (Pages 3 to 4 and FIG. 1). The handlebar unit disclosed in JP-A-Hei 3-208786 (Pages 3 to 4 and FIG. 1) has handlebar assemblies attached to the respective upper ends of a pair of left and right tubular bodies of a front fork, and a handlebar crown for connecting the tubular bodies.

Each handlebar assembly includes a base fitted on the tubular body, and a handlebar extending from the base to the outside of a vehicle body. The base is C-shaped in cross section, and has a fastening bolt fitted therein for reducing the size of an opening of the base.

Tightening the fastening bolt causes the base to bind the tubular body tightly, thereby fixing the handlebar assembly to the tubular body. Meanwhile, loosening the fastening bolt permits rotation of the base about the tubular body so that the attachment angle of the handlebar assembly as viewed from above can be changed.

The change in the attachment angle of the handlebar assembly is achieved using a positioning projection formed on the base. The projection extends to the inside in the vehicle width direction, and secured to the handlebar crown with a securing bolt. The handlebar crown has a plurality of bolt holes drilled at a position along an arc about the tubular body of the front fork so as to engage with the securing bolt. More specifically, changing the bolt hole to engage with the securing bolt to another bolt hole allows a change in the attachment angle of the handlebar assembly.

JP-A-Hei 3-208786 (Pages 3 to 4 and FIG. 1) also discloses a handlebar unit designed such that the handlebar assembly is attached partway along the tubular body of the front fork. The handlebar assembly of this handlebar unit includes a base having a C-shaped cross section and fitted on the peripheral face of the tubular body; a handlebar projecting to the outside from the base; and engaging means provided between the base and the tubular body.

The engaging means includes a pin projecting on the tubular body, and a spiral guide groove recessed in the inner peripheral face of the base so as to engage with the pin. The guide groove extends in the vertical direction and in the circumferential direction of the tubular body. According to this handlebar unit, loosening the fastening bolt of the base permits vertical movement of the base relative to the tubular body. At this time, since the pin is in engagement with the guide groove, the attachment angle of the handlebar assembly changes according to the position of the pin.

In the handlebar unit disclosed in JP-A-Hei 3-208786 (Pages 3 to 4 and FIG. 1), the attachment angle of the handlebar assembly can be changed, but since the handlebar assembly is attached to the tubular body of the front fork, the attachment position of the handlebar assembly cannot be changed to a forward or rearward position of the vehicle body, which raises a problem. It should be noted that the tubular body of the front fork is disposed at a certain caster angle to be inclined forward and downward, and thus vertical movement of the handlebar assembly along the tubular body causes a change in the position of the handlebar assembly in the longitudinal direction of the vehicle body. When the longitudinal position of the handlebar assembly is determined to a desired position on this principle, however, the handlebar assembly changes significantly in height, making it difficult to steer through such handlebar unit.

A handlebar unit as indicated in the preamble of claim 1 is known from *JP-A-Hei 3-208786*. This document discloses a saddle type vehicle with a handlebar unit, wherein the distance between the plurality of engagement parts of the engagement means on one side of the vehicle width direction is not different from a distance between the plurality of engagement parts on the other side in the vehicle width direction (Fig. 4). Another handlebar assembly is also known from DE 20 2004 001 704 *and DE 20009433*.

The present invention has been made in view of the foregoing problem, and has an object to provide a saddle type vehicle with a handlebar unit that enable adjustments to the attachment angle of handlebars and the attachment position thereof in the longitudinal direction of a vehicle body.

This objective is solved in an inventive manner by the features of claim 1 wherein a saddle type vehicle with a handlebar unit, comprises a handlebar crown a pair of separate left and right handlebar assemblies attached to the handlebar crown and securing means for securing the left and right handlebar assemblies respectively to the handlebar crown, wherein each securing means includes a fastening means for fastening the handlebar crown and the respective handlebar assembly together, and an engaging means for positioning the handlebar crown and the respective handlebar assembly, wherein each handlebar assembly can be displaced in a longitudinal direction of a vehicle body relative to the handlebar crown and wherein each engaging means has a plurality of engagement parts provided in the direction in which the respective handlebar assembly is to be displaced, and the plurality of engagement parts of each engaging means is provided on both lateral sides of the respective fastening means in a vehicle width direction wherein in each engaging means a distance between the plurality of engagement parts of the engaging means on one lateral side of the respective fastening means in the vehicle width direction is different from a distance between the plurality of engagement parts of the engaging means on the other lateral side of the respective fastening means in the vehicle width direction.

Preferably, each fastening means includes a securing bolt disposed at a connection part where the handlebar crown and the respective handlebar assemblies are to be fastened to each other.

Further, preferably each engaging means includes a pin disposed on one of the handlebar crown and the respective handlebar assembly, and a pin hole disposed in the other.

Still further, preferably the handlebar crown has the securing bolt extending therethrough, and a bolt hole, in particular a slot, that is longer in the longitudinal direction of the vehicle body, and wherein a plurality of pin holes and/or pins of the engaging means are provided along the bolt hole.

Yet further, preferably the respective handlebar assembly has the securing bolt extending therethrough, and a bolt hole, in particular a slot, that is longer in the longitudinal direction of the vehicle body, and wherein a plurality of pin holes and/or pins of the engaging means are provided along the bolt hole.

Still further, preferably an attachment face of the handlebar crown to which the handlebar is to be attached is formed to extend generally horizontally when the handlebar crown is attached to the vehicle body.

Preferably, the left handlebar assembly is secured by a left-side securing bolt on the left side of the vehicle body to the handlebar crown, the right handlebar assembly is secured by a right-side securing bolt on the right side of the vehicle body to the handlebar crown, and wherein the handlebar unit further comprises a coupling plate disposed below the handlebar crown for coupling the left-side securing bolt and the right-side securing bolt.

Preferably, the first securing bolt is located on the outside and a second securing bolt located on the inside in the vehicle width direction with respect to the vehicle body, and wherein the engaging means is disposed between the first bolt and the second bolt. Therein, the second bolt may be thinner than the first bolt.

According to a further embodiment, the first bolt is fixed to the coupling plate below the handlebar crown to extend upward, and passed through the handlebar crown and the handlebar from below, and a first nut is fitted on the upper end of the first bolt, and wherein the second bolt is passed through the handlebar crown and the handlebar from above, and the lower end of the second bolt is fitted in a second nut fixed to the coupling plate.

Preferably, the first left-side securing bolt and the first right-side securing bolt are located on the outside and the second left-side securing bolt and the second right-side bolt are located on the inside in the vehicle width direction with respect to the vehicle body, wherein the left and right first bolts are fixed to the coupling plate below the handlebar crown to extend upward, and passed through the handlebar crown and the respective handlebars from below, and first nuts are fitted on the respective upper ends of the left and right first bolts, and wherein the left and right second bolts are passed through the handlebar crown and the respective handlebars from above, and the lower ends of the left and right second bolts are fitted in respective second nuts fixed to the coupling plate.

In the following, the present invention is explained in greater detail with respect to several embodiments thereof in conjunction with the accompanying drawings, wherein:
- FIG. 1: is a plan view of a handlebar unit for a motorcycle according to an embodiment,
- FIG. 2: is an enlarged plan view of the inner end portion of a left handlebar in the vehicle width direction,
- FIG. 3: is a rear view of the left handlebar with respect to a vehicle body, illustrating the state as seen from the rear side of the vehicle body,
- FIG. 4: is a plan view of a handlebar crown,
- FIG. 5: is an enlarged sectional view of a connection part of the handlebar and the handlebar crown,
- FIG. 6: is a plan view of a coupling plate,
- FIG. 7: is a rear view of the coupling plate, illustrating the state as seen from the rear side of the vehicle body,
- FIG. 8: is a vertical sectional view of the handlebar crown, and
- FIG. 9: is a side view of a motorcycle having the handlebar unit according to an embodiment.

### Description of Reference Numerals:

1: handlebar unit 3: handlebar crown
4,5: handlebar assembly 15: attachment face 16: first slot
17: second slot 18: engaging means 19: pin hole 21: first bolt
22: second bolt 23: securing means 32: first bolt hole
33: second bolt hole 34: pin 36: fastening means 37: first nut
38: second nut 41: coupling plate

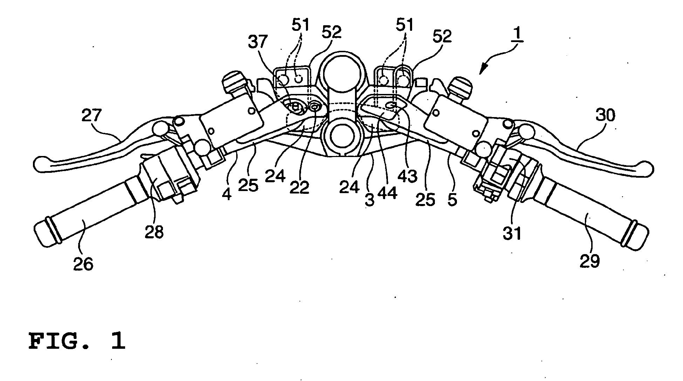

Description will be hereinafter made in detail of the handlebar unit for a motorcycle according to the present embodiment referring to FIGs. 1 through 9.

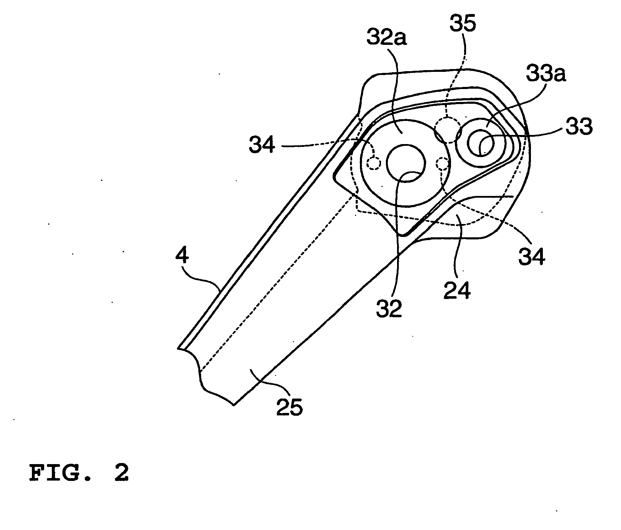

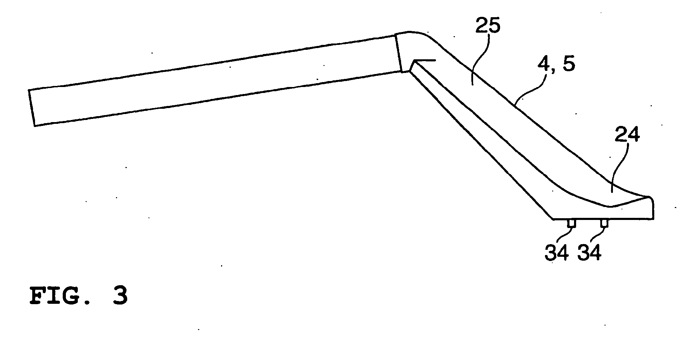

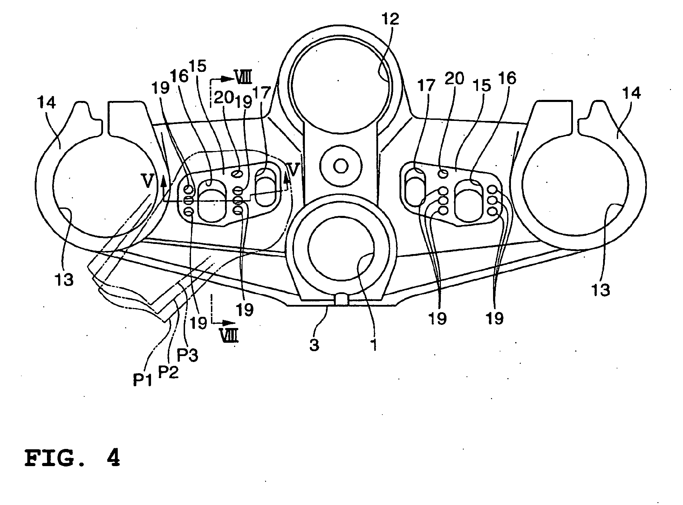

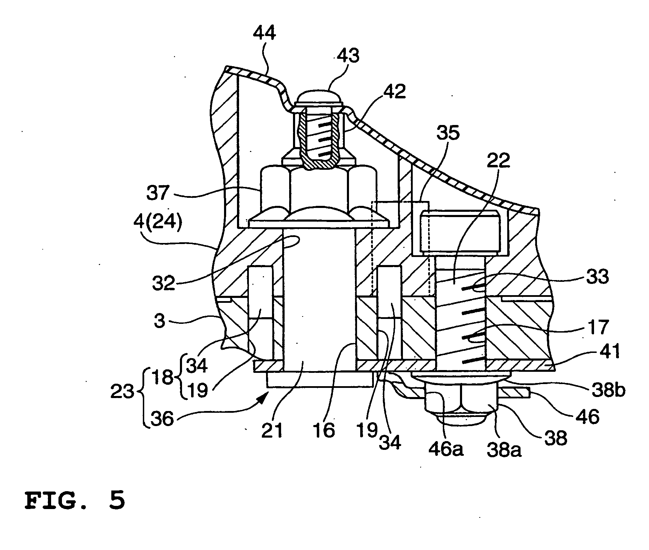

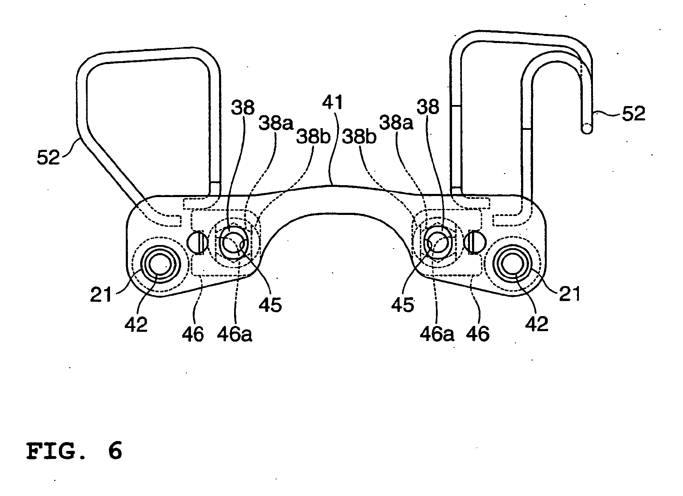

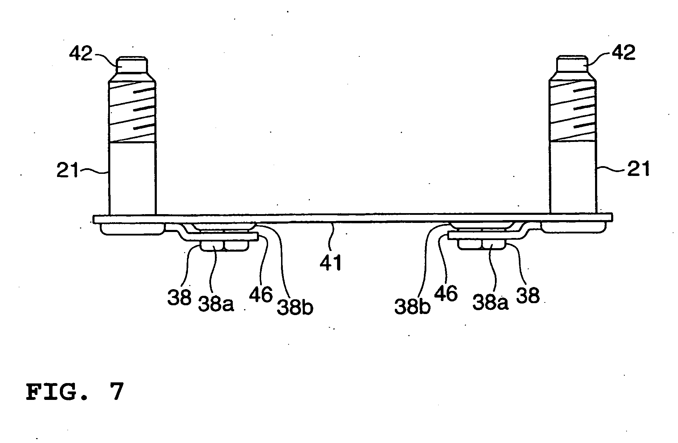

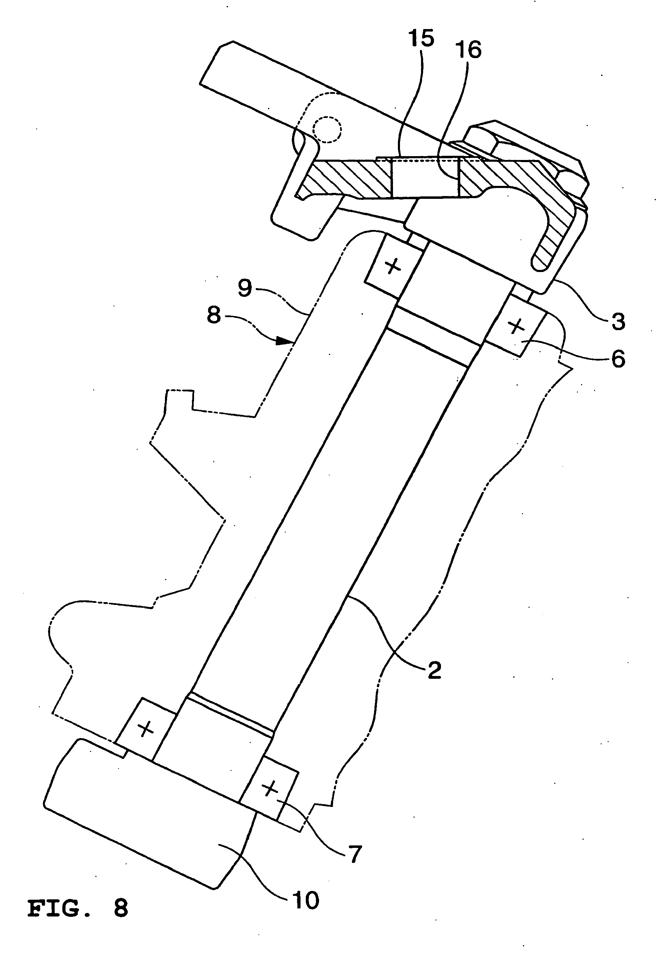

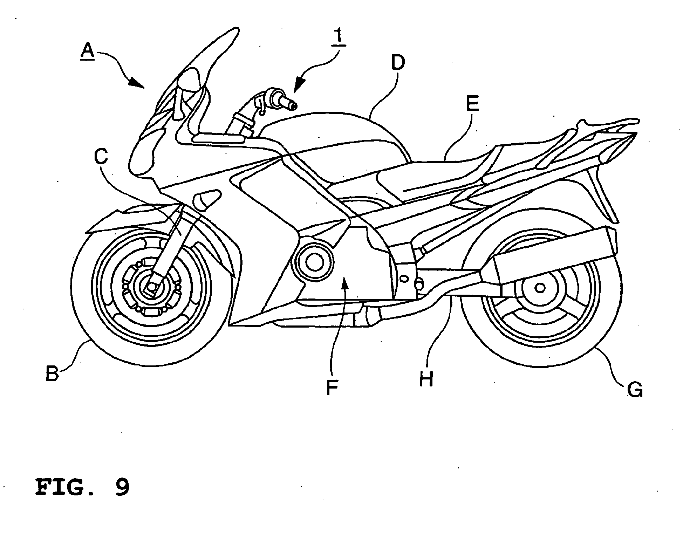

FIG. 1 is a plan view of a handlebar unit for a motorcycle according to the embodiment. FIG. 2 is an enlarged plan view of the inner end portion of a left handlebar in the vehicle width direction. FIG. 3 is a rear view of the left handlebar with respect to a vehicle body, illustrating the state as seen from the rear side of the vehicle body. FIG. 4 is a plan view of a handlebar crown. FIG. 5 is an enlarged sectional view of a connection part of the handlebar and the handlebar crown. The position at which the section of Fig. 5 is taken is shown by the line V-V in FIG. 4. FIG. 6 is a plan view of a coupling plate. FIG. 7 is a rear view of the coupling plate, illustrating the state as seen from the rear side of the vehicle body. FIG. 8 is a vertical sectional view of the handlebar crown, illustrating the state of the handlebar crown being attached to a steering shaft. The position at which the section of Fig. 8 is taken is shown by the line VIII-VIII in FIG. 4. FIG. 9 is a side view of a motorcycle having the handlebar unit according to the embodiment.

In the drawings, reference numeral 1 denotes the handlebar unit for a motorcycle according to this embodiment. The handlebar unit 1 according to this embodiment is designed for a so-called on-road type motorcycle A, as shown in FIG. 9. In FIG. 9, symbol B denotes a front wheel, C a front fork, D a fuel tank, E a seat, F an engine, G a rear wheel, and H a rear arm.

As shown in FIG. 8, the handlebar unit 1 has a handlebar crown 3 fixed to the upper end of a steering shaft 2, and a pair of left and right handlebar assemblies 4, 5 attached to the upper portion of the handlebar crown 3.

The steering shaft 2 is supported in a head pipe 9 of a body frame 8 with bearings 6, 7 for left-and-right rotation. In other words, the handlebar crown 3 is supported with the head pipe 9 via the steering shaft 2 for steering movement.

The lower end of the steering shaft 2 is attached to an under bracket 10 of the front fork C. The under bracket 10 and the handlebar crown 3 serve to hold a pair of left and right tubular bodies of the front fork C.

The handlebar crown 3 is shaped like a plate by casting of an aluminum alloy material. As shown in FIG. 4, the transverse central portion of the handlebar crown 3 has a rear attachment hole 11 for fixing the steering shaft 2 and a front attachment hole 12 for attaching a key switch (not shown) in longitudinal alignment with each other. The transversely opposite ends of the handlebar crown 3 have fork attachment parts 14 each having a circular hole 13 in which the tubular body of the front fork can be fitted.

The fork attachment part has a C-shaped cross section, having the front end with respect to the vehicle body separated into left and right portions. The fork attachment part 14 binds tightly and holds the tubular body of the front fork as a fastening bolt (not shown) is secured to this separated portion, causing the size of the circular hole 13 to be reduced.

The handlebar crown 3 at a part inside of the fork attachment part 14 in the vehicle width direction has an attachment face 15 to which the handlebar assembly 4, which will be discussed in greater detail below, is attached.

The attachment face 15 is formed to extend generally horizontally when the handlebar crown 3 is attached to the vehicle body, as shown in FIG. 8. As shown in FIG. 4, the attachment face 15 has a first slot 16 and a second slot 17 drilled therein that define bolt holes on the handlebar crown 3 side in the present embodiment, and a plurality of pin holes 19, 19... drilled therein that define part of an engaging means 18 (see FIG. 5) in the present embodiment. The engaging means 18 serves to position the handlebar crown 3 and the handlebar assemblies 4, 5.

The first slot 16 and the second slot 17 extend longer longitudinally, and are drilled in the attachment face 15 in alignment with each other in the vehicle width direction. The first slot 16 is located outside of the second slot 17 with respect to the vehicle body.

The plurality of pin holes 19 are provided in the attachment face 15 at a part adjacent to and outside of the first slot 16 with respect to the vehicle body (hereinafter this part is simply referred to as outside of the first slot 16) and a part between the first slot 16 and the second slot 17 (hereinafter this part is simply referred to as between the slots).

In this embodiment, three pin holes 19 are drilled both outside of the first slot 16 and between the slots so as to be spaced apart from each other with a certain distance therebetween in the longitudinal direction (direction in which the slots 16, 17 extend). These pin holes 19 are drilled to vertically extend through the handlebar crown 3, as shown in FIG. 5.

The distance between the respective pin holes of the three pin holes 19 outside of the first slot 16 is different from the distance between the respective pin holes of the other three pin holes 19. In this embodiment, the distance between the respective pin holes of the three pin holes 19 outside of the first slot 16 is larger than the distance between the respective pin holes of the three pin holes 19 between the slots. Incidentally, referring to FIG. 4, the handlebar crown 3 according to this embodiment has water-draining through holes 20 each drilled forwardly of the three pin holes 19 between the slots with respect to the vehicle body.

The left handlebar assembly 4 and the right handlebar assembly 5 with respect to the vehicle body are symmetrical to each other in the vehicle width direction. Therefore, it should be noted that the description herein is made only of the left handlebar assembly 4 with respect to the vehicle body, and as to the right handlebar assembly 5 with respect to the vehicle body, the same reference numerals are attached, and detailed description will not be repeated.

As shown in FIGs. 1 through 3, and 5, the handlebar assembly 4 includes a base 24 secured to the attachment face 15 of the handlebar crown 3 with a securing means 23 including a first bolt 21 and a second bolt 22, and a handlebar 25 extending from the base 24 to the outside of the vehicle body. The handlebar assembly 4 according to this embodiment is formed by forging.

As shown in FIG. 1, the left handlebar assembly 4 with respect to the vehicle body has a grip 26, a clutch lever 27, a switch box 28, and the like attached thereto. The right handlebar assembly with respect to the vehicle body has a throttle grip 29, a front brake lever 30, a switch box 31, and the like attached thereto.

As shown in FIGs. 2 and 3, the base 24 has a first bolt hole 32 and a second bolt hole 33 drilled therein that define bolt holes on the handlebar side in the present embodiment. The first bolt hole 32 is formed at a position that communicates with the first slot 16 when the base 24 is disposed on the attachment face 15 in an overlapping manner. The second bolt hole 33 is formed at a position that communicates with the second slot 17 when the base 24 is disposed on the attachment face 15 in an overlapping manner.

The lower face of the base 24 is in a flat shape so that the entire area of the lower face contacts the upper face of the attachment face 15. On the lower face of the base 24 and on both sides of the first bolt hole 32, there are provided two pins 34, 34 that define engagement parts of the engaging means 18 in the present invention along with the pin holes 19. The pins 34 have the size to be fitted in the respective pin holes 19, and are disposed respectively on the left and right sides of the first bolt hole 32 with respect to the vehicle body, as shown in FIG. 2.

The distance between the two pins 34, 34 is equal to the distance between a row of the pin holes 19 of the handlebar crown 3 outside the vehicle body (hereinafter this row of the pin holes 19 is referred to as outside row) and a row of the pin holes 19 on the inside in the vehicle width direction (hereinafter this row of the pin holes 19 is referred to as inside row). More specifically, referring to FIG. 4, the two pins 34 are designed to fit in a pair of pin holes 19, 19 aligned in the vehicle width direction among the three pin holes 19 of the outside row and the three pin holes 19 of the inside row. In this embodiment, there are provided three pairs of pin holes 19, 19 so that one of the longitudinal three positions can be selected to change the attachment position of the handlebar assembly 4.

The base 24 also has a water-draining passage 35 between the first bolt hole 32 and the second bolt hole 33 and on the front side of the vehicle body, as shown in FIGs. 2 and 5. The water-draining passage 35 has the upper end opening at countersunk portions 32a, 33a of the bolt holes 32, 33 and the lower end opening at the lower face of the base 24. The water-draining passage 35 serves to force the water entering the countersunk portions 32a, 33a to run downward for discharge through the pin holes 19 between the slots and the through hole 20 of the handlebar crown 3.

The securing means 23 for securing the handlebar assembly 4 to the handlebar crown 3 includes a fastening means 36 having the first bolt 21 and the second bolt 22 extending vertically at a connection part of the handlebar crown 3 and the handlebar assembly 4, and an engaging means 18 including the pin holes 19 of the handlebar crown 3 and the pins 34 of the handlebar assembly 4, as shown in FIG. 5. In this embodiment, the first bolt 21 and the second bolt 22 define a securing bolt in the present embodiment. The first bolt 21 and the second bolt 22 for securing the left handlebar assembly 4 with respect to the vehicle body to the handlebar crown 3 define a left-side securing bolt according to the seventh aspect described later, and the first bolt 21 and the second bolt 22 for securing the right handlebar assembly 5 with respect to the vehicle body to the handlebar crown 3 define a right-side securing bolt according to the seventh aspect described later.

As shown in FIG. 5, the fastening means 36 includes the first bolt 21, the first slot 16, the first bolt hole 32, a first nut 37 fitted on the first bolt 21, the second bolt 22, the second slot 17, the second bolt hole 33, and a second nut 38 fitted on the second bolt 22.

As shown in FIGs. 5 through 7, the first bolt 21 is fixed to a coupling plate 41 that is located below the handlebar crown 3, and extends upward through the handlebar crown 3 and the handlebar assembly 4 from below. The upper end of the first bolt 21 is formed with a female threaded portion 42, in which a retaining screw 43 is fitted. The retaining screw 43 is used to attach a face plate 44 to the upper face of the base 24 of the handlebar assembly 4. The face plate 44 covers the first and second bolts 21, 22 from above as shown in FIG. 1, in which the face plate 44 is attached to the right handlebar assembly 5 with respect to the vehicle body.

The coupling plate 41 is formed of a steel material in a plate-like shape extending in the vehicle width direction. The coupling plate 41 has the left end with respect to the vehicle body to which the first bolt 21 for the left handlebar assembly 4 is welded, and the right end to which the first bolt 21 for the right handlebar assembly 5 is welded. As shown in FIG. 6, the coupling plate 41 at a position inside of the first bolt 21 in the vehicle width direction has a slot 45 drilled therein through which the second bolt 22 is inserted, and the second nut 38, or flanged hexagonal nut, held with a holding member 46.

As shown in FIGs. 6 and 7, the holding member 46 has a rectangular hole 46a as viewed in a plan view in which a hexagonal portion 38a of the second nut 38 is fitted, and is welded to the lower face of the coupling plate 41 while interposing a flange portion 38b of the second nut 38 in cooperation with the coupling plate 41. The rectangular hole 46a has the sufficient size to permit movement of the second nut 38 in the longitudinal direction of the vehicle body. The coupling plate 41 according to this embodiment has the front end with respect to the vehicle body to which guide members 52 for guiding cable wires 51 shown by the chain double-dashed line in FIG. 1, or the like are welded.

The second bolt 22 used is thinner than the first bolt 21. As shown in FIG. 5, the second bolt 22 extends through the handlebar crown 3 and the handlebar assembly 4 from above and is fitted in the second nut 38 held on the coupling plate 41.

In the handlebar unit 1 for a motorcycle constructed as above, attachment of the handlebar assembly 4 to the handlebar crown 3 is performed as follows. First, the first bolt 21 provided on the coupling plate 41 is inserted through the first slot 16 of the handlebar crown 3 from below. Then, the handlebar assembly 4 is placed on the handlebar crown 3, while the first bolt 21 is inserted through the first bolt hole 32 of the handlebar assembly 4.

The first nut 37 is then fitted on the first bolt 21, and the pins 34 are fitted in the respective pin holes 19. At this time, the two pins 34 are fitted in one of the three pairs of pin holes 19 aligned longitudinally.

As the pins 34 are fitted in the respective pin holes 19 accordingly, the handlebar assembly 4 is positioned on the handlebar crown 3. While the handlebar assembly 4 is in position, the first nut 37 is fastened, and the second bolt 22 is inserted through the second bolt hole 33 of the handlebar assembly 4 and the second slot 17 of the handlebar crown 3 from above and then fitted in the second nut 38. Upon fastening of the first nut 37 and fastening of the second bolt 22, the securing work of the handlebar assembly 4 completes.

To change the attachment position of the handlebar assembly 4, the first nut 37 and the second bolt 22 are loosened, and then the handlebar assembly 4 is lifted from the handlebar crown 3 until the pins 34 and the corresponding pin holes 19 are brought out of the fitted state. Then, the left and right handlebar assemblies 4 and 5 are displaced forward or rearward together, and then the pins 34 are fitted in the desired pin holes 19.

In this embodiment, the three pairs of pin holes 19, each pair being aligned in the vehicle width direction, are provided longitudinally so that the longitudinal position of the handlebar assembly 4 is determined to one of the forward position, the center position, and the rearward position. The attachment angle of the handlebar assembly 4 as viewed from above changes according to the longitudinal attachment position of the handlebar assembly 4, because the longitudinal distance between the respective pin holes 19 is different between the outside row and the inside row.

More specifically, when the handlebar assembly 4 is attached to the rearward position (shown by the chain double-dashed line P1 in FIG. 4), the inclination angle of the handlebar 25 with respect to the longitudinal direction of the vehicle body (handlebar opening) is small compared to when the handlebar assembly 4 is attached to the center position (shown by the chain double-dashed line P2 in FIG. 4). On the other hand, when the handlebar assembly 4 is attached to the forward position (shown by the chain double-dashed line P3 in FIG. 4), the inclination angle of the handlebar with respect to the longitudinal direction of the vehicle body (handlebar opening) is large compared to when the handlebar assembly 4 is attached to the center position.

After the longitudinal position of the handlebar assembly 4 is determined, the first nut 37 and the second bolt 22 are fastened to complete the handlebar position changing work.

In the handlebar unit 1 for a motorcycle described above, therefore, the attachment position of the handlebar assemblies 4, 5 can be easily changed in the longitudinal direction, and hence the attachment angle of the handlebar assemblies 4, 5 as viewed from above can be changed.

In the handlebar unit 1 for a motorcycle according to this embodiment, the attachment faces 15, to which the handlebar assemblies 4, 5 are attached, are formed to extend generally horizontally, allowing a change in the longitudinal position of the handlebar assemblies 4, 5 without any change to their height.

In the handlebar unit 1 for a motorcycle according to this embodiment, the coupling plate 41 has the first bolts 21, 21 for the left and right handlebar assemblies 4, 5. This allows longitudinal displacement of the handlebar assemblies 4, 5 in operatively associated relation to each other for a change in the longitudinal position of the left and right handlebar assemblies 4, 5. It is thus possible to locate the left and right handlebar assemblies 4, 5 in position quickly with accuracy without any misalignment in longitudinal position between the left and right handlebar assemblies 4, 5.

In the handlebar unit 1 for a motorcycle according to this embodiment, the engaging means 18 including the pins 34 and the pin holes 19 is provided on both sides of the first bolt hole 32 and the first slot 16 in the vehicle width direction. According to the handlebar unit 1 according to this embodiment, therefore, positioning of the handlebar assemblies 4, 5 is ensured by means of the engaging means 18 in the two places.

In the handlebar unit 1 for a motorcycle according to this embodiment, the distance between the respective pin holes 19 outside of the first slot 16 is different from the distance between the respective pin holes 19 between the slots. According to the handlebar unit 1, therefore, changing the longitudinal position of the handlebar assemblies 4, 5 allows a change in the attachment angle of the handlebar assemblies 4, 5 as viewed from above. It is thus possible to make the left and right handlebar assemblies 4, 5 agree with each other in attachment angle easily when the attachment angle of the handlebar assembles 4, 5 is changed.

In the handlebar unit 1 for a motorcycle according to this embodiment, the handlebar assemblies 4, 5 are secured to the handlebar crown 3 with the first bolt 21 and the second bolt 22, between which the engaging means 18 including the pins 34 and the pin holes 19 are disposed. According to the handlebar unit 1, therefore, the handlebar assemblies 4, 5 can be reliably secured to the handlebar crown 3 with the two bolts 21, 22, and the engaging means 18 is held in reliable engagement by means of the two bolts 21, 22 on both sides of the engaging means 18.

In the handlebar unit 1 for a motorcycle according to this embodiment, the second bolt 22 is thinner than the first bolt 21, providing compacter transverse inner ends of the handlebar assemblies 4, 5.

In the handlebar unit 1 for a motorcycle according to this embodiment, the first nut 37 can be fitted on the first bolt 21 from above, and the second bolt 22 can be fitted in the second nut 38 of the coupling plate 41 from above. According to the handlebar unit 1, therefore, since the first bolt 21 serves as a support shaft of the handlebar assemblies 4, 5, and the second bolt 22 is removable from above, bolt and nut loosening/tightening work for changing the attachment position of the handlebar assemblies 4, 5 can be performed easily only from above, from which the handlebar assembles 4, 5 are more visible.

In the foregoing embodiment, the pin 34 is fitted in the pin hole 19. However, the pin 34 may be loosely fitted in the pin hole 19 by making the diameter of the pin 34 smaller than the diameter of the pin hole 19. The employment of this structure allows a slight adjustment to the attachment angle of the handlebar assemblies 4, 5 as viewed from above while the pin 34 is inserted in the pin hole 19.

In the foregoing embodiment, the two bolts 21, 22 are used to secure the handlebar assemblies 4, 5 to the handlebar crown 3, and the two pins 34, 34 are fitted in the respective pin holes 19. However, the securing bolts 21, 22 and the pins 34, 34 may be one bolt and one pin.

In the foregoing embodiment, the first bolt 21 outside the vehicle body is provided on the coupling plate 41. However, the second bolt 22 on the inside in the vehicle width direction may be welded to the coupling plate such that the threaded portion is located above, and the first bolt 21 outside the vehicle body may be fitted in the nut on the coupling plate 41 from above.

In the foregoing embodiment, the pins 34 are provided on the handlebar assemblies 4, 5, and the pin holes 19 are provided in the handlebar crown 3. However, the pins 34 may be provided on the handlebar crown 3, and the pin holes 19 in the handlebar assemblies 4, 5, which provides the same effect.

## Claims

1. Saddle type vehicle with a handlebar unit (1) comprising a handlebar crown (3),
a pair of separate left and right handlebar assemblies (4,5) attached to the handlebar crown (3), and
securing means (23) for securing the left and right handlebar assemblies (4,5), respectively, to the handlebar crown (3),
wherein each securing means includes a fastening means (36) for fastening the handlebar crown (3) and the respective handlebar assembly (4,5) together, and an engaging means (18) for positioning the handlebar crown (3) and the respective handlebar assembly (4,5),
wherein each handlebar assembly (4,5) can be displaced in a longitudinal direction of a vehicle body relative to the handlebar crown (3), and
wherein each engaging means (18) has a plurality of engagement parts (19,34) provided in the direction in which the respective handlebar (4,5) assembly is to be displaced, **characterized in that** the plurality of engagement parts (19, 34) of each engaging means (18) is provided on both lateral sides of the respective fastening means (36) in a vehicle width direction, and
in each engaging means a distance between the plurality of engagement parts (19,34) of the engaging means (18) on one lateral side of the respective fastening means (36) in the vehicle width direction is different from a distance between the plurality of engagement parts (19,34) of the engaging means (18) on the other lateral side of the respective fastening means in the vehicle width direction.

2. Saddle type vehicle (1) according to claim 1, **characterized in that** each fastening means (36) includes a securing bolt (21,22) disposed at a connection part where the handlebar crown (3) and the respective handlebar assembly (4,5) are to be fastened to each other.

3. Saddle type vehicle (1) according to claims 1 or 2, **characterized in that** each engaging means (18) includes a pin (34) disposed on one of the handlebar crown (3) and the respective handlebar assembly (4,5), and a pin hole (19) disposed in the other.

4. Saddle type vehicle (1) according to claim 3, **characterized in that** the handlebar crown (3) has a securing bolt (21,22) extending therethrough, and a bolt hole in form of a slot (16,17), that is longer in the longitudinal direction of the vehicle body, and wherein a plurality of pin holes (19) and/or pins (34) of the engaging means (18) are provided along the slot (16, 17).

5. Saddle type vehicle (1) according to claim 3, **characterized in that** the respective handlebar assembly (4,5) has a securing bolt (21,22) extending therethrough, and a bolt hole (32,33) in form of a slot, that is longer in the longitudinal direction of the vehicle body, and wherein a plurality of pin holes (19) and/or pins (34) of the engaging means (18) are provided along the bolt hole (32,33).

6. Saddle type vehicle (1) according to one of the claims 1 to 5, **characterized in that** an attachment face (15) of the handlebar crown (3) to which the handlebar assembly (4,5) is to be attached is formed to extend generally horizontally when the handlebar crown (3) is attached to the vehicle body.

7. Saddle type vehicle (1) according to one of the claims 2 to 6, **characterized in that** the left handlebar assembly (4) is secured by a left-side securing bolt (21,22) on the left side of the vehicle body to the handlebar crown (3), the right handlebar assembly (5) is secured by a right-side securing bolt (21,22) on the right side of the vehicle body to the handlebar crown (3), and wherein the handlebar unit (1) further comprises a coupling plate (41) disposed below the handlebar crown (3) for coupling the left-side securing bolt (21,22) and the right-side securing bolt (21,22).

8. Saddle type vehicle (1) according to one of the claims 2 to 7, **characterized in that** each fastening means (36) includes a first securing bolt (21) being located on the outside and a second securing bolt (22) being located on the inside in the vehicle width direction with respect to the vehicle body, and wherein the respective engaging means (18) is disposed between the first securing bolt an the second securing bolt (21,22).

9. Saddle type vehicle (1) according to claim 8, **characterized in that** the second securing bolt (22) is thinner than the first securing bolt (21).

10. Saddle type vehicle (1) according to claim 8 or 9, **characterized in that** the first securing bolt (21) is fixed to a coupling plate (41) below the handlebar crown (3) to extend upward, and passed through the handlebar crown (3) and the respective handlebar assembly (4,5) from below, and a first nut (37) is fitted on the upper end of the first bolt (21), and wherein the second securing bolt (22) is passed through the handlebar crown (3) and the respective handlebar assembly (4,5) from above, and the lower end of the second securing bolt (22) is fitted in a second nut (38) fixed to the coupling plate (41).

11. Saddle type vehicle (1) according to claim 17 **characterized in that** the left-side securing bolt (21, 22) and the right-side securing bolt (21, 22) are each defined by a first securing bolt (21) being located on the outside and a second securing bolt (22) being located on the inside in the vehicle width direction with respect to the vehicle body, and wherein the left and right first securing bolts (21) are fixed to the coupling plate (41) below the handlebar crown (3) to extend upward, and passed through the handlebar crown (3) and the handlebar assemblies (4,5) from below, and first nuts (37) are fitted on the respective upper ends of the left and right first securing bolts, and wherein the left and right second securing bolts (22) are passed through the handlebar crown (3) and the handlebar assemblies (4,5) from above, and the lower ends of the left and right second securing bolts (22) are fitted in respective second nuts (38) fixed to the coupling plate (41).

## Patentansprüche

1. Sitzfahrzeug mit einer Lenkeinheit (1) aufweisend einen Lenkerscheitel (3), ein Paar separater linker und rechter Lenkerbaugruppen (4, 5), die an den Lenkerscheitel (3) angeordnet sind, und Sicherheitsmittel (23) zum Sichern der linken und rechten Lenkerbaugruppen (4, 5) an den Lenkerscheitel (3), wobei jedes Sicherheitsmittel mit einem Befestigungsmittel (36) beinhaltet zum Befestigen des Lenkerscheitels (3) und der jeweiligen Lenkerbaugruppen (4, 5) aneinander, und ein Verbindungsmittel (18) zum Anordnen des Lenkerscheitels (3) an den jeweiligen Lenkerbaugruppen (4, 5), wobei jede Lenkebaugruppe (4, 5) in einer Längsrichtung eines Fahrzeugkörpers relativ zum Lenkerscheitel (3) angeordnet werden kann, und wobei jedes Verbindungsmittel eine Vielzahl von Verbindungsteilen (19, 34) hat, die in einer Richtung vorgesehen sind, in die jeweiligen Lenkerbaugruppen zu ordnen sind, **gekennzeichnet dadurch, dass** eine Vielzahl von Verbindungsteilen (19, 34) der Bindungsmittel (18) auf beiden lateralen Seiten der jeweiligen Festigungsmittel in Querrichtung des Fahrzeuges vorgesehen sind und in jedem Verbindungsmittel ein Abstand zwischen einer Vielzahl der Verbindungsteile (19, 34) der Verbindungsmittel (18) auf einer lateralen Seite des jeweiligen Befestigungsmittel (36) in Querrichtung des Fahrzeuges unterschiedlich zu einem Abstand zwischen einer Vielzahl von Verbindungsteilen (19, 34) den Verbindungsmittel (18) auf der anderen lateralen Seite des jeweiligen Befestigungsmittel in Querrichtung des Fahrzeuges ist.

2. Sitzfahrzeug (1) nach Anspruch 1, **dadurch gekennzeichnet, dass** jedes Befestigungsmittel (36) einen Sicherheitsbolzen (21, 22) beinhaltet, der an einem Verbindungsabschnitt an dem der Lenkerscheitel (3) und die jeweiligen Lenkerbaugruppen (4, 5) aneinander befestigt werden, angeordnet ist.

3. Sitzfahrzeug (1) nach den Ansprüchen 1 oder 2, **dadurch gekennzeichnet, dass** jedes Verbindungsmittel (18) einen Stift (34) enthält, der entweder dem Lenkerscheitel (3) oder der jeweiligen Lenkerbaugruppe (4, 5) angeordnet ist und eine Stiftöffnung (19) in dem jeweiligen anderen angeordnet ist.

4. Sitzfahrzeug (1) nach Anspruch 3, **dadurch gekennzeichnet, dass** der Lenkerscheitel (3) einen Sicherheitsbolzen (21, 22) hat, der sich durch diesen erstreckt und eine Bolzenöffnung in Form einer Aufnahme (16, 17), das länger in Längsrichtung des Fahrzeugkörpers ist und wobei die Vielzahl der Stiftöffnungen (19) und/oder Stifte der Verbindungsnippel (34) entlang der Aufnahme (16, 17) angeordnet sind.

5. Sitzfahrzeug (1) nach Anspruch 3, **dadurch gekennzeichnet, dass** die jeweilige Lenkerbaugruppe (4, 5) einen Sicherheitsbolzen hat, die sich durch diese hindurch erstreckt und eine Bolzenöffnung (32, 33) in Form einer Aufnahme, die in der Längsrichtung des Fahrzeugkörpers länger ist, und wobei eine Vielzahl von Stiftöffnungen (19) und/oder Stiften (34) der Verbindungsmittel (18) entlang der Bolzenöffnung (32, 33) angeordnet sind.

6. Sitzfahrzeug (1) nach einem der Ansprüche 1 bis 5, **dadurch gekennzeichnet, dass** eine Anbringungsseite (15) des Lenkerscheitels (3) an die Lenkerbaugruppe (4, 5) angebracht ist, derart geformt ist, im allgemeinen waagerecht zu verlaufen, wenn der Lenkerscheitel (3) an dem Fahrzeugkörper angebracht ist.

7. Sitzfahrzeug (1) nach einem der Ansprüche 2 bis 6, **dadurch gekennzeichnet, dass** die linke Lenkerbaugruppe (4) durch einen linksseitigen Sicherheitsbolzen auf der linken Seite des Fahrzeugkörpers an dem Lenkerscheitel (3) gesichert ist, wobei die rechte Lenkerbaugruppe (5) durch einen rechtsseitigen Sicherheitsbolzen (21, 22) auf der rechten Seite des Fahrzeugkörpers an dem Lenkerscheitel (3) gesichert ist und wobei die Lenkereinheit (1) weiterhin eine Kupplungsplatte (41) beinhaltet, die unterhalb des Lenkerscheitels (3) angeordnet ist, um den linksseitigen Sicherheitsbolzen (21, 22) und den rechtsseitigen Sicherheitsbolzen (21, 22) zu koppeln.

8. Sitzfahrzeug (1) nach einem der Ansprüche 2 bis 7, **dadurch gekennzeichnet, dass** jedes Befestigungsmittel einen ersten Sicherheitsbolzen (21) beinhaltet, der auf einer Außenseite angeordnet ist und einen zweiten Sicherheitsbolzen (22), der auf einer Innenseite angeordnet ist, gesehen in Querrichtung des Fahrzeuges bezüglich des Fahrzeugkörpers und wobei das jeweilige Verbindungsmittel (18) zwischen dem ersten Sicherheitsbolzen und dem zweiten Sicherheitsbolzen (21, 22) angeordnet ist.

9. Sitzfahrzeug (1) nach Anspruch 8, **dadurch gekennzeichnet, dass** der zweite Sicherheitsbolzen (22) dünner als der erste Sicherheitsbolzen (21).

10. Sitzfahrzeug (1) nach einem der Ansprüche 8 oder 9, **dadurch gekennzeichnet, dass** der erste Sicherheitsbolzen (21) an einer Kupplungsplatte (41) unterhalb des Lenkerscheitels 83) befestigt ist, um nach oben gerichtet zu sein, und durch den Lenkerscheitel (3) und die jeweilige Lenkerbaugruppe (4, 5) von unten sich hindurch erstreckt, und eine erste Nuss (37) auf dem oberen Ende des ersten Bolzens (21) montiert ist und wobei der zweite Sicherheitsbolzen (22) sich durch den Lenkerscheitel (3) und die jeweilige Lenkerbaugruppe (4, 5) von oberhalb hindurch erstreckt, und ein unteres Ende des zweiten Sicherheitsbolzens (22) in einer zweiten Nuss (38) montiert ist, die mit der Kupplungsplatte (41) verbunden ist.

11. Sitzfahrzeug (1) nach Anspruch 7, **dadurch gekennzeichnet, dass** der linksseitige Sicherheitsbolzen (21, 22) und der rechtsseitige Sicherheitsbolzen (21, 22) jeder durch einen ersten Sicherheitsbolzen (21), der auf einer Außenseite angeordnet ist, und einen zweiten Sicherheitsbolzen (22), der auf einer Innenseite angeordnet ist, gebildet sind, gesehen in Querrichtung des Fahrzeuges bezüglich des Fahrzeugkörpers, und wobei der linke und rechte Sicherheitsbolzen (21) an der Kupplungsplatte 41 unterhalb des Lenkerscheitels (3) befestigt sind, um sich nach oben zu erstrecken und durch den Lenkerscheitel (3) und die Lenkerbaugruppen (4, 5) von unterhalb hindurch erstreckt, und erste Nüsse (37) auf oberen Enden der linken und rechten Sicherheitsbolzen montiert sind, und wobei die linken und rechten Sicherheitsbolzen durch den Lenkerscheitel (3) und die Lenkerbaugruppen (4, 5) von oberhalb sich hindurch erstrecken, und die unteren Enden der linken und rechten Sicherheitsbolzen (22) in jeweiligen zweiten Nüssen (38) montiert sind, an der Kupplungsplatte (41) befestigt ist.

## Revendications

1. Véhicule du type à selle avec une unité de guidon (1) comprenant un sommet de guidon (3),
deux ensembles de guidon gauche et droit séparés (4, 5) attachés au sommet de guidon (3), et
des moyens de fixation (23) pour fixer les ensembles de guidon gauche et droit (4, 5), respectivement, au sommet de guidon (3),
étant précisé que chaque moyen de fixation comprend un moyen d'attache (36) pour attacher ensemble le sommet de guidon (3) et l'ensemble de guidon respectif (4, 5), et un moyen d'accouplement (18) pour positionner le sommet de guidon (3) et l'ensemble de guidon respectif (4, 5),
que chaque ensemble de guidon (4, 5) peut être déplacé dans un sens longitudinal d'un corps de véhicule par rapport au sommet de guidon (3), et
que chaque moyen d'accouplement (18) a plusieurs éléments d'accouplement (19, 34) prévus dans le sens dans lequel l'ensemble de guidon respectif (4, 5) peut être déplacé,
**caractérisé en ce que** les éléments d'accouplement (19, 34) de chaque moyen d'accouplement (18) sont prévus sur les deux côtés latéraux du moyen d'attache respectif (36), dans le sens de la largeur du véhicule, et
**en ce que** dans chaque moyen d'accouplement, une distance entre les éléments d'accouplement (19, 34) du moyen d'accouplement (18) sur un côté latéral du moyen d'attache respectif (36), dans le sens de la largeur du véhicule, est différente d'une distance entre les éléments d'accouplement (19, 34) du moyen d'accouplement (18) sur l'autre côté latéral du moyen d'attache respectif, dans le sens de la largeur du véhicule.

2. Véhicule du type à selle (1) selon la revendication 1, **caractérisé en ce que** chaque moyen d'attache (36) comprend un axe de fixation (21, 22) disposé sur une partie de liaison où le sommet de guidon (3) et l'ensemble de guidon respectif (4, 5) doivent être attachés l'un à l'autre.

3. véhicule du type à selle (1) selon les revendications 1 ou 2, **caractérisé en ce que** chaque moyen d'accouplement (18) comprend une cheville (34) disposée sur le sommet de guidon (3) ou sur l'ensemble de guidon respectif (4, 5), et un perçage pour cheville (19) disposé respectivement sur l'ensemble de guidon respectif (4, 5) ou sur le sommet de guidon (3).

4. Véhicule du type à selle (1) selon la revendication 3, **caractérisé en ce que** le sommet de guidon (3) a un axe de fixation (21, 22) qui le traverse, et un perçage pour axe, sous la forme d'une fente (16, 17), qui est plus long dans le sens longitudinal du corps de véhicule, et étant précisé que plusieurs perçages pour cheville (19) et/ou plusieurs chevilles (34) du moyen d'accouplement (18) sont prévus le long de la fente (16, 17).

5. véhicule du type à selle (1) selon la revendication 3, **caractérisé en ce que** l'ensemble de guidon respectif (4, 5) a un axe de fixation (21, 22) qui le traverse, et un perçage pour axe (32, 33), sous la forme d'une fente, qui est plus long dans le sens longitudinal du corps de véhicule, et étant précisé que plusieurs perçages pour chevilles (19) et/ou plusieurs chevilles (34) du moyen d'accouplement (18) sont prévus le long du perçage pour axe (32, 33).

6. Véhicule du type à selle (1) selon l'une des revendications 1 à 5, **caractérisé en ce qu'**une face d'attache (15) du sommet de guidon (3) à laquelle l'ensemble de guidon (4, 5) doit être attaché est formée de manière à s'étendre globalement à l'horizontale quand le sommet de guidon (3) est attaché au corps de véhicule.

7. véhicule du type à selle (1) selon l'une des revendications 2 à 6, **caractérisé en ce que** l'ensemble de guidon gauche (4) est fixé au sommet de guidon (3) par un axe de fixation gauche (21, 22) sur le côté gauche du corps de véhicule, l'ensemble de guidon droit (5) est fixé au sommet de guidon (3) par un axe de fixation droit (21, 22) sur le côté droit du corps de véhicule, et étant précisé que l'unité de guidon (1) comprend par ailleurs une plaque d'assemblage (41) qui est disposée sous le sommet de guidon (3) pour assembler l'axe de fixation gauche (21, 22) et l'axe de fixation droit (21, 22).

8. Véhicule du type à selle (1) selon l'une des revendications 2 à 7, **caractérisé en ce que** chaque moyen de fixation (36) comprend un premier axe de fixation (21) qui se trouve à l'extérieur, et un second axe de fixation (22) qui se trouve à l'intérieur, dans le sens de la largeur du véhicule, par rapport au corps de véhicule, et étant précisé que le moyen d'accouplement respectif (18) est disposé entre les premier et second axes de fixation (21, 22).

9. véhicule du type à selle (1) selon la revendication 8, **caractérisé en ce que** le second axe de fixation (22) est plus mince que le premier axe de fixation (21).

10. véhicule du type à selle (1) selon la revendication 8 ou 9, **caractérisé en ce que** le premier axe de fixation (21) est fixé à une plaque d'assemblage (41) sous le sommet de guidon (3) de manière à s'étendre vers le haut, et traverse ledit sommet (3) et l'ensemble de guidon respectif (4, 5) par dessous, et un premier écrou (37) est placé sur l'extrémité supérieure du premier axe (21), et étant précisé que le second axe de fixation (22) traverse le sommet de guidon (3) et l'ensemble de guidon respectif (4, 5) par dessus, et que l'extrémité inférieure du second axe de fixation (22) est placée dans un second écrou (38) fixé à la plaque d'assemblage (41).

11. véhicule du type à selle (1) selon la revendication 17, **caractérisé en ce que** l'axe de fixation gauche (21, 22) et l'axe de fixation droit (21, 22) sont définis chacun par un premier axe de fixation (21) qui se trouve à l'extérieur et par un second axe de fixation (22) qui se trouve à l'intérieur, dans le sens de la largeur du véhicule, par rapport au corps de véhicule, et étant précisé que les premiers axes de fixation gauche et droit (21) sont fixés à la plaque d'assemblage (41) sous le sommet de guidon (3) de manière à s'étendre vers le haut, et traversent le sommet de guidon (3) et les ensembles de guidon (4, 5) par dessous, et que des premiers écrous (37) sont placés sur les extrémités supérieures respectives des premiers axes de fixation gauche et droit, et que les seconds axes de fixation gauche et droit (22) traversent le sommet de guidon (3) et les ensembles de guidon (4, 5) par dessus, et que les extrémités inférieures des seconds axes de fixation gauche et droit (22) sont placées dans les seconds écrous respectifs (38) fixés à la plaque d'assemblage (41).
